# EUROPÄISCHE PATENTSCHRIFT

(11) **EP 0 983 196 B1**
(45) Veröffentlichungstag und Bekanntmachung des Hinweises auf die Patenterteilung: **04.10.2001**
(21) Anmeldenummer: 98924292.0
(22) Anmeldetag: 08.05.1998
(51) Int. Cl.: B64F 1/22

(54) **SCHLEPPFAHRZEUG FÜR FLUGZEUGE**
AIRCRAFT TOWING VEHICLE
VEHICULE DE REMORQUAGE POUR AVIONS

(30) Priorität: 21.05.1997 DE 19721315
(43) Veröffentlichungstag der Anmeldung: 08.03.2000
(73) Patentinhaber: FMC International AG, Home Mortage Plaza, Hato Rey, Puerto Rico 00918 (PR)
(72) Erfinder: TRUMMER, Gregor, D-82343 Aschering (DE); MANN, Hartmut, D-80997 München (DE); FUCHS, Thomas, D-80997 München (DE)
(74) Vertreter: Rutetzki, Andreas, Dipl.-Ing.
(86) Internationale Anmeldenummer: EP9802708
(87) Internationale Veröffentlichungsnummer: WO9852822

(56) Entgegenhaltungen:
- EP-A- 0 276 779
- EP-A- 0 644 115
- DE-A- 4 415 405
- DE-A- 4 446 048

## Beschreibung

Die Erfindung betrifft ein Schleppfahrzeug für Flugzeuge von der im Oberbegriff des Anspruchs 1 angegebenen Art. Ein solches Schleppfahrzeug ist aus DE 44 46 048 A1 bekannt.

Beim Schleppfahrzeuge dieser Art erfolgt die Ankopplung an das Bugfahrwerk eines zu schleppenden Flugzeuges in der Weise, daß das Schleppfahrzeug, bei in Freigabestellung geschwenkten Wiederlagern, so an das Bugfahrwerk herangefahren wird, daß sich die Bugräder in dem U-Ausschnitt des Fahrgestells befinden. Anschließend werden die Wiederlager in die Arbeitsstellung geschwenkt, so daß sie die Bugräder hintergreifen, und die Bugräder mittels der Widerlager auf die Hubschaufel gezogen, mit der Hubschaufel abgestützt und angehoben und auf der Hubschaufel eingespannt.

Bei dem aus DE 44 46 048 A1 bekannten Schleppfahrzeug ist jedes Widerlager an der zugehörigen Führungsschiene mittels einer vorderen und einer hinteren Rolle geführt, und jede Führungsschiene ist an ihrem hinteren Ende nach außen abgewinkelt, so daß bei Annäherung des Widerlagers an das hintere Ende der Führungsschiene eine Schwenkbewegung des Widerlagers in die Freigabestellung erzwungen wird. Damit wird eine vorteilhafte Vereinfachung gegenüber anderen bekannten Schleppfahrzeugen z.B. gemäß DE 37 32 664 A1 oder US 43 75 244 erzielt, bei denen für jedes Widerlager zusätzlich zu dem es in Längsrichtung bewegenden Linearantrieb ein gesonderter Schwenkantrieb für das Ein- und Ausschwenken des Widerlagers vorgesehen ist.

Die aus DE 44 46 048 A1 bekannte Konstruktion mit nach außen abgewinkelten Führungschienen hat jedoch auch Nachteile. Ein Nachteil besteht darin, daß die abgewinkelten Endabschnitte der Führungsschienen, die die beiden Schenkel des Fahrgestells nach hinten umgreifen, die Baulänge des Fahrzeugs in unerwünschter Weise vergrößern. Dabei ist zu berücksichtigen, daß anstelle der in DE 44 46 048 A1 vereinfacht dargestellten scharf rechtwinkeligen Abwinklung in der Praxis eine mit einem größeren Radius gekrümmte Abwinkelung erforderlich ist, um einen gleichmäßigen Ausschwenkvorgang der Widerlager zu steuern. Die Herstellung solcher abgewinkelten Führungsschienen ist außerdem teuer, und da es sich bei den Führungsschienen um schwere und massive Teile handeln muß, wird durch den abgewinkelten Teil jeder Führungsschiene das Gewicht des Fahrzeugs in unerwünschter Weise vergrößert.

Der Erfindung liegt die Aufgabe zugrunde, ein Schleppfahrzeug der angegebenen Art so auszubilden, daß eine ausschließlich durch Betätigung des Linearantriebs erzwungene Schwenkung der Widerlager von der Arbeitsstellung in die Freigabestellung, und umgekehrt, bewirkt wird, ohne daß hierfür eine Abwinklung oder gekrümmte Verlängerung der Führungsschienen erforderlich ist.

Die erfindungsgemäße Lösung der Aufgabe ist im Anspruch 1 angegeben. Die Unteransprüche beziehen sich auf weitere vorteilhafte Ausgestaltungen der Erfindung.

Bei dem erfindungsgemäßen Schleppfahrzeug wird die Führungsfunktion, durch die die lineare Vorwärts- und Rückwärtsbewegung der Widerlager in eine Schwenkbewegung umgewandelt wird, nicht von der Führungsschiene, sondern von einer am Widerlager ausgebildeten und mit diesen beweglichen Führungskulisse übernommen, in die ein ortsfest an der Führungsschiene angeordneter Führungsstift eingreift. Die Führungskulisse kann geradlinig verlaufen, wobei eine zur Wirklinie des Linearantriebs exzentrische Anordnung des Führungsstiftes das erforderliche Drehmoment für das Schwenken des Widerlagers bewirkt.

Die Führungskullise kann aber auch nach Art eines Führungsprofils gekrümmt sein, bzw. einen die Schwenkbewegung des Widerlagers steuernden schrägen Abschnitt aufweisen.

Da die Führungsschiene die Schwenkbewegung des Widerlagers nicht zu steuern braucht, kann sie rein geradlinig und wesentlich kürzer als die bekannte Führungsschiene ausgebildet werden. Dadurch ergeben sich eine geringere Baulänge, ein geringeres Gewicht und geringere Herstellkosten.

Ausführungsformen der Erfindung werden anhand der Zeichnungen erläutert. Es zeigt:

Fig. 1 eine schematische Perspektivdarstellung des erfindungsgemäßen Schleppfahrzeugs.

Fig. 2 eine Draufsicht auf die Hub- und Einspannvorrichtung gemäß einer ersten Ausführungsform der Erfindung.

Fig. 3 einen schematischen Schnitt nach der Linie III-III von Fig. 2.

Fig. 4 in ähnlicher Darstellung wie Fig. 3 eine geänderte Ausführungsform.

Fig. 5A, 5B und 5C eines der beiden Widerlager in der Arbeitsstellung, in der teilweise ausgeschwenkten Stellung und in der ausgeschwenkten Freigabestellung.

Fig. 6A, 6B und 6C sowie Fig. 7A, 7B und 7C ähnliche Darstellungen wie 5A, 5B und 5C für zwei geänderte Ausführungsformen der Erfindung.

Fig. 8 ein Detail am Ende der Führungsschiene gemäß einer weiteren Ausführungsform der Erfindung.

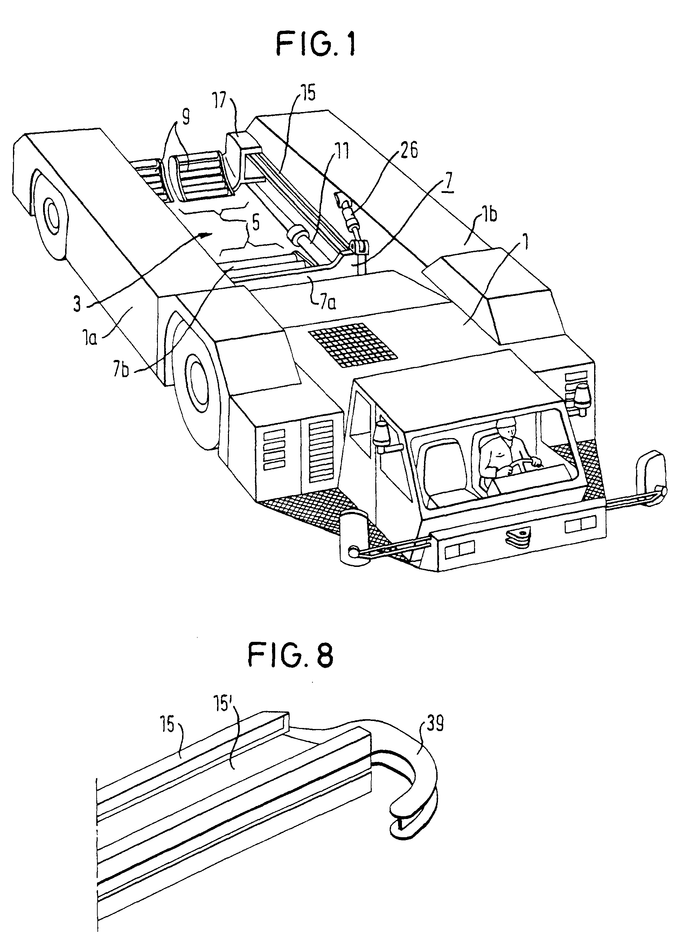

Das in Fig. 1 dargestellte Schleppfahrzeug für Flugzeuge hat ein Fahrgestell 1, das im hinteren Bereich U-förmig ausgeschnitten ist, so daß zwei Fahrgestellschenkel 1A, 1B zwischen sich einen nach hinten offenen U-Ausschnitt 3 begrenzen. In dem U-Ausschnitt 3 ist die Hub- und Einspannvorrichtung 5 angeordnet, mit der die Bugräder eines Flugzeuges ergriffen, angehoben, abgestützt und festgespannt werden können. Die wesentlichen Bestandteile der Hub- und Einspannvorrichtung 5 sind eine Hubschaufel 7 mit einer etwa lotrechten Vorderwand 7A und einer etwa horizontalen, mit Rollen versehenen Bodenfläche 7B, sowie zwei Widerlager 9, die hinter die Bugräder eines Flugzeuges eingeschwenkt und mit je einem Linearantrieb 11, insbesondere einem Hydraulikzylinder, gegen die Bugräder angepreßt werden können, um diese auf die Hubschaufel 7 zu ziehen und auf dieser festzuspannen.

Die gesamte Hub- und Einspannvorrichtung ist am Fahrgestell 1 um eine in Fahrzeuglängsrichtung verlaufende mittige Achse frei drehbar gelagert. Mittels Hydraulikzylindern 26, die die Hubschaufel 7 mit dem Fahrgestell verbinden, kann die gesamte Hub- und Einspannvorrichtung 5 um eine horizontale Querachse aufwärts und abwärts geschwenkt werden, um das auf der Hubschaufel 7 aufgenommene Bugfahrwerk eines Flugzeugs anzuheben oder abzusenken. Für Details der Konstruktion und Wirkungsweise der Hub- und Einspannvorrichtung 5 wird auf die bereits genannte DE 44 46 048 A1 verwiesen.

Auf jeder Seite der Hubschaufel 7 ist an dieser eine im Querschnitt H-förmige Führungsschiene 15 befestigt, die sich parallel zum jeweiligen Fahrgestellschenkel 1A, 1B nach hinten erstreckt. An jeder Führungsschiene 15 ist ein Schlitten 17 längsverschiebbar geführt, der starr mit dem jeweiligen Widerlager 9 verbunden ist. Mittels eines Linearantriebs, insbesondere eines Hydraulikzylinders 11 kann der das Widerlager 9 tragende Schlitten 17 längs der Führungsschiene nach hinten, bzw. nach vorne bewegt werden. Der als Linearantrieb dienende Hydraulikzylinder 11 kann, wie in Fig. 1 gezeigt, unterhalb der Führungsschiene 15 angeordnet sein, oder oberhalb derselben, wie in den weiteren Figuren dargestellt.

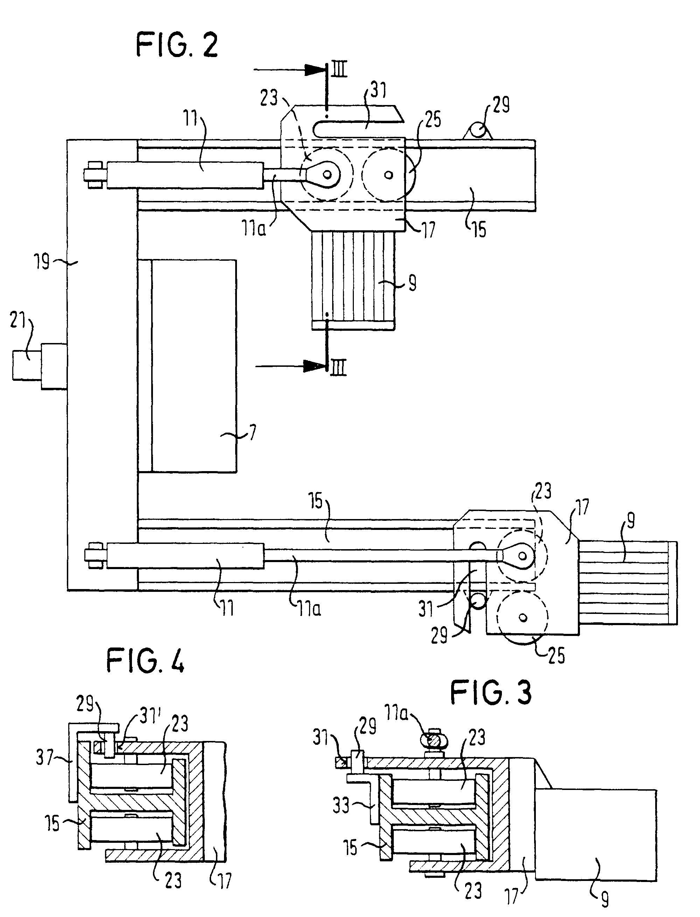

Fig. 2 zeigt in schematischer Draufsicht eine erste Ausführungsform der Hub- und Einspannvorrichtung. Sie umfaßt einen Querträger 19, der mittels eines Lagerzapfens 21 am Fahrgestell um eine horizontale Längsachse frei drehbar gelagert ist, damit die gesamte Hub- und Einspannvorrichtung den bei Kurvenfahrten auftretenden Schrägstellungen des eingespannten Bugfahrwerks folgen kann. Eine Anordnung von Lenkern (nicht dargestellt), die teilweise als Hydraulikzylinder ausgebildet sind, stabilisiert die Hub- und Einspannvorrichtung bei ihren Pendelbewegungen, wie näher in DE 44 46 048 A1 beschrieben. Das Querstück 19 trägt die Hubschaufel 7 und die beiden Führungsschienen 15. Ferner sind am Querstück 19 die Hydraulikzylinder 11 angelenkt. Die Kolbenstange 11a jedes Hydraulikzylinders 11 ist mit einem ein Widerlager 9 tragenden Schlitten 17 gelenkig verbunden. Jeder Schlitten 17 ist an der zugehörigen Führungsschiene 15 mittels vorderer Führungsrollen 23 und hinterer Führungsrollen 25 geführt. Die vorderen und hinteren Führungsrollen 23, 25 bestehen jeweils aus einem Paar von Führungrollen, die in den oberen und unteren Kanal der H-förmigen Führungsschiene eingreifen, wie in Fig. 3 für die vorderen Führungsrollen 23 dargestellt. Der Schlitten 17

hat eine die Führungsschiene 17 U-förmig umgreifende Form. Die Kolbenstange 11a des zugehörigen Hydraulikzylinders 11 ist vorzugsweise koaxial zu den hinteren Führungrollen 23 am Schlitten 17 angelenkt.

Jede Führungsschiene 15 verläuft auf ihrer ganzen Länge geradlinig. Nahe dem hinteren Ende der Führungsschiene 15 ist an deren Außenseite, d.h. exzentrisch zur Längsmittelachse der Führungsschiene 15, ein Führungsstift 29 befestigt. Dieser wirkt mit einer Führungskulisse 31 des Schlittens 17 des Widerlagers 9 zusammen, wobei diese Führungskulisse 31 bei der gezeigten Ausführungsform die Form eines nach hinten offenen geradlinigen Schlitzes hat. Der Führungsstift 29 kann, wie in Fig. 3 dargestellt, mit einer Winkellasche 33 an der Außenseite der Führungsschiene 15 befestigt sein.

Solange sich die vorderen und hinteren Führungsrollen 23, 25 in Eingriff in der Führungsschiene 15 befinden, ist der Schlitten 17 mit dem Widerlager 9 in der Führungsschiene 15 drehfest abgestützt, und das Widerlager 9 ist in der quer zur Führungsschiene 15 stehenden Arbeitsstellung blockiert, wie im oberen Teil von Fig. 2 dargestellt. Wenn der Schlitten 17 durch Ausfahren des Hydraulikzylinders 11 soweit nach hinten verschoben worden ist, daß die hintere Führungsrolle 25 ihre Abstützung an der Führungsschiene 15 verliert, kann sich der Schlitten 17 um die Achse der vorderen Führungsrolle 23 drehen. Zunächst wird dies noch durch den Führungsstift 29, der in die Führungskulisse 31 eingetreten ist, verhindert. Wenn jedoch bei weiterer Rückwärtsbewegung des Schlittens 19 die Achse der vorderen Führungsrolle 23 etwa auf gleicher Höhe wie der Führungsstift 29 steht, dann bewirkt das durch die Schubkraft des Hydraulikzylinders 11 bezüglich des Führungsstiftes 29 erzeugte Drehmoment eine Schwenkung des Schlittens 17 um die Achse der vorderen Führungsrolle 23, so daß der Schlitten 17 um die Achse der vorderen Führungsrolle 23 geschwenkt wird,

und das Widerlager 9 in die in der unteren Hälfte von Fig. 2 gezeigte Freigabestellung gelangt, in der es parallel zur Längsrichtung des Schleppfahrzeuges steht und den Eintritt des Bugfahrwerkes eines Flugzeugs in den Raum zwischen den Führungsschienen 15 nicht behindert. Beim Einziehen der Kolbenstange 11a bewirkt der gegen die Flanke der Führungskulisse 31 drückende Führungsstift 29 eine Schwenkbewegung des Schlittens 17 mit dem Widerlager 9 zurück in die Arbeitsstellung. Es versteht sich, daß die beiden Hydraulikzylinder 11 immer synchron betätigt werden, so daß ungleiche Stellungen des rechten und linken Widerlagers, wie in Fig. 2 der Einfachheit halber dargestellt, in der Praxis nicht auftreten.

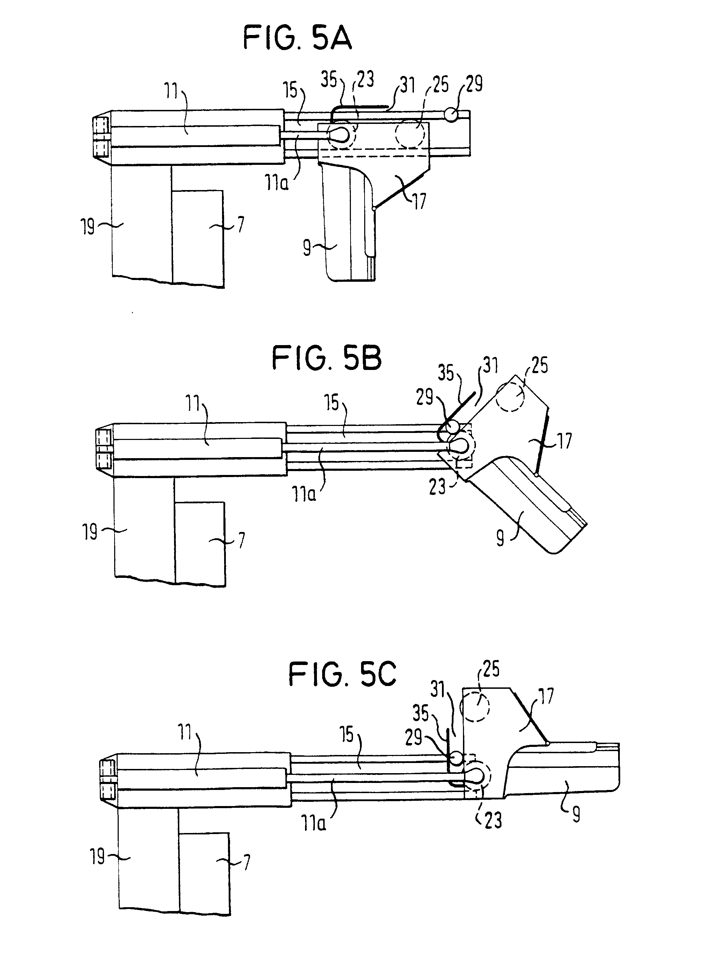

Fig. 5A, 5B und 5C zeigen drei Phasen des Ausschwenkvorgangs eines Widerlagers bei einer ähnlich Fig. 2 ausgeführten, aber praxisgerechter dargestellten Ausführungsform. Es werden die gleichen Bezugszeichen verwendet wie in Fig. 2. Der Führungsstift 29 ist in diesem Fall auf den äußeren Flansch der Führungsschiene 15 aufgesetzt. Die mit ihm zusammenwirkende Führungskulisse 31 wird durch ein am Schlitten 17 befestigtes hakenähnliches Teil 35 gebildet. Fig. 5A zeigt den Schlitten 17 mit dem Widerlager 9 bei eingefahrener Kolbenstange 11a in der Arbeits- oder Einspannposition, wobei sich die vorderen und hinteren Führungsrollen 23, 25 in Eingriff mit der geradlinigen Führungsschiene 15 befinden. Fig. 5B zeigt eine teilweise ausgeschwenkte Stellung des Schlittens 17 mit dem Widerlager 9, wobei die hintere Führungsrolle 25 nicht mehr in Eingriff mit der Führungsschiene 15 ist und der Führungsstift 29 in die Führungskulisse 31 eingetreten ist und durch Andrücken gegen das hakenförmige Element 35 das Drehmoment zum Schwenken des Schlittens 17 erzeugt. Fig. 5C zeigt die Position beim maximalen Ausfahrhub der Kolbenstange 11a, wobei der Schlitten 17 mit Widerlager 9 gegenüber der Stellung nach Fig. 5A um 90° in die Freigabestellung geschwenkt worden ist. Wird,

ausgehend von dieser Stellung, die Kolbenstange 11a wieder eingefahren und in Fig. 15 nach links bewegt, dann drückt der Führungstift 29 gegen die die Führungskulisse 31 begrenzende Seitenfläche des Schlittens 7 und bewirkt ein Drehmoment um die Achse der vorderen Führungsrolle 23, durch die der Schlitten 17 mit dem Widerlager 9 über die Zwischenstellung gemäß Fig. 5B in die Arbeitsstellung gemäß Fig. 5A zurückgeschwenkt wird, wodurch dann auch die hintere Führungsrolle 25 wieder in die Führungsschiene 15 eintreten kann.

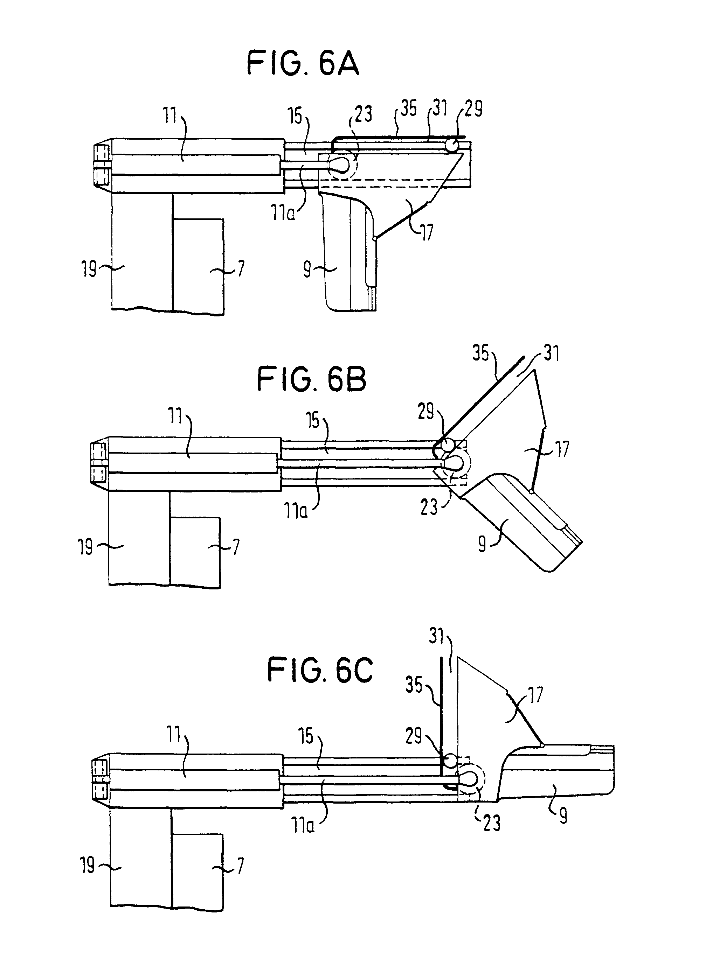

Fig. 6A, 6B und 6C zeigen die analogen Positionen bei einer abgeänderten Ausführungsform, bei der der Schlitten 17 nur mit einem vorderen Paar Führungsrollen 23 an der Führungsschiene 15 geführt ist. Ein zweites, hinteres Paar von Führungsrollen fehlt. Um trotzdem eine drehfeste Abstützung des Schlittens 17 an der Führungsschiene 15 in der Arbeitsstellung (Fig. 6A) zu gewährleisten, ist die Länge des Schlittens 17 und des an ihm befestigten hakenförmigen Ansatzes 35 so verlängert, daß bereits in der in Fig. 6A dargestellten Arbeitsstellung bei maximal eingefahrener Kolbenstange 11A der Führungsstift 29 in die zwischen dem hakenförmigen Teil 35 und dem Schlitten 17 gebildete Führungskulisse 31 eingreift und die seitliche Abstützung des Schlitten 17 übernimmt. Analog zu den Fig. 5B und 5C beginnt auch bei dieser Ausführungsform die Schwenkung des Schlittens 17 mit dem Widerlager 9, wenn die Kolbenstange 11A soweit ausgefahren ist, daß sich die Achse der Führungsrolle 23 ungefähr in gleicher Höhe wie der Führungsstift 29 befindet. Ein geringfügiges weiteres Ausfahren der Kolbenstange 11a, wobei aber die Führungsrolle 23 ihren Eingriff in der Führungsschiene 15 nicht verliert, bewirkt die endgültige Schwenkung in die in Fig. 6C dargestellte Freigabestellung des Widerlagers 9.

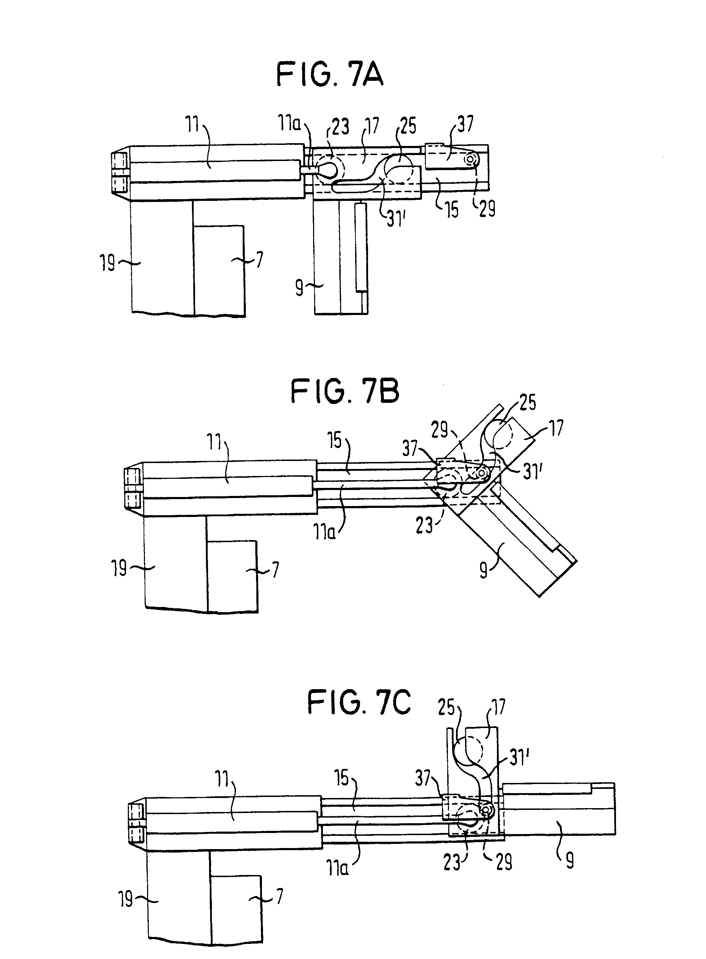

Bei der in Fig. 7A, 7B und 7C gezeigten Ausführungsform ist der das Widerlager 9 tragende Schlitten 17 mit vorderen Führungsrollen 23 und hinteren Führungsrollen 25 in der Führungsschiene 15 geführt. Im Gegensatz zu den Auführungsformen nach Fig. 2, 5A und 6A ist die für das Steuern der Schwenkbewegung des Schlittens 17 vorgesehene Führungskulisse 31' nicht geradlinig, sondern besteht aus einem S-förmig gekrümmten Schlitz, der in der oberen Wand des Schlittens 17 ausgebildet ist. Der mit dem Schlitz 31' zusammenwirkende Führungszapfen 29 ist in diesem Fall oberhalb der Führungsschiene 15 mittels einer nach innen abgewinkelten Winkellasche 37 befestigt, wie in Fig. 4 schematisch dargestellt. Entsprechend seiner S-Form, hat der Führungsschlitz 31' zwei geradlinige längsverlaufende Endteile und dazwischen einen schrägen Mittelteil, der im Zusammenwirken mit den Führungsstift 29 eine Schwenkbewegung des Schlittens 17 nach außen um die Achse der vorderen Führungsrolle herum erzwingt, und zwar zu einem Zeitpunkt, an dem die hintere Führungsrolle 23 die Führungschiene 17 verlassen hat, wie in den Fig. 7B und 7C dargestellt.

Bei allen dargestellten Ausführungsformen müssen die Führungsrollen 23, 25 im Zusammenwirken mit der Führungsschiene 15 nicht nur die seitliche Führung und Stabilisierung des Schlittens 17 mit dem Widerlager 9 übernehmen, sondern auch das Gewicht des Schlitten 17 mit dem Widerlager 9 an der Führungsschiene 15 abstützen. Wenn z.B. in den Stellungen gemäß Fig. 5B, 6B und 7B nur noch die jeweils vordere Führungsrolle 23 in Eingriff mit der Führungsschiene 15 ist, ist das Gewicht des hinteren Teils des Schlittens 17 nicht mehr an der Führungsschiene 15 abgestützt. Es besteht deshalb die Gefahr, daß der Schlitten 17 mit dem Widerlager 9 relativ zur Führungsschiene 15 absackt, bzw. verkantet. Um dies zu verhindern, kann gemäß einer weiteren Ausführungsform der Erfindung, wie in Fig. 8 schematisch dargestellt, am hinteren Ende jeder Führungsschiene 15 ein Verlängerungsstück 39 befestigt sein, welches hornartig gekrümmt und gegenüber der Führungsschiene 15 nach außen abgewinkelt ist. Dieses Verlängerungstück 39 hat die gleiche Dicke wie der Mittelsteg 15' der H-förmigen Führungsschiene 15 und dient dazu, daß sich auf ihm die Unterseite der oberen hinteren Führungsrolle 25 abstützen kann, wenn sie die Führungsschiene 15 verlassen hat und zusammen mit dem Schlitten 17 nach außen geschwenkt wird. Auf diese Weise ist der Schlitten 17 mit dem Widerlager 9 auch beim Ausschwenken und in der voll ausgeschwenkten Freigabestellung gewichtsmäßig abgestützt und kann sich gegenüber der Führungsschiene 15 nicht verkanten. Im Vergleich zu der aus DE 44 46 048 A1 bekannten Abwinkelung der gesamten Führungschiene stellt die in Fig. 8 dargestellte Lösung mit einem lediglich den Mittelsteg der Führungsschiene 15 verlängernden hornartigen Verlängerungsstück 39 eine wesentlich geringere Erhöhung des Gewichts, des Platzbedarfs und der Kosten der Führungsschiene dar. Die eingangs geschilderten Vorteile der Erfindung gegenüber der bekannten abgewinkelten Führungsschiene werden daher auch bei der Ausführungsform gemäß Fig. 8 im wesentlichen erzielt.

## Patentansprüche

1. Schleppfahrzeug für Flugzeuge,
mit einer das Bugfahrwerk eines Flugzeugs aufnehmenden Hub- und Einspannvorrichtung (5),
die in einem nach hinten offenen U-Ausschnitt (3) des Fahrgestells (1) angeordnet ist und eine heb- und senkbare Hubschaufel (7) für Abstützen der Bugräder und zwei in Längsrichtung des Fahrgestells verschiebbare Widerlager (9) für das Hintergreifen und Einspannen der Bugräder aufweist,
wobei jedes Widerlager (9) an einer in Fahrzeuglängsrichtung verlaufenden Führungsschiene (15) verschiebbar geführt und längs dieser mittels eines Linearantriebs (11) antreibbar ist,
wobei jedes Widerlager (9) um eine im wesentlichen lotrechte Achse aus einer Arbeitsstellung, in der es quer zur Längsrichtung des Fahrgestells in den U-Ausschnitt (3) ragt, in eine Freigabestellung schwenkbar ist, in der es etwa parallel zur Längsrichtung des Fahrzeugs steht und den Eintritt der Bugräder in den U-Ausschnitt nicht behindert,
und wobei zusammenwirkende Führungsmittel an der Führungsschiene und dem Widerlager vorgesehen sind, die im Bereich des hinteren Endes der Führungsschiene (15) eine Schwenkbewegung des Widerlagers (9) aus der Arbeits- in die Freigabestellung bzw. umgekehrt erzwingen, wenn das Widerlager mittels des Linearantriebs nach hinten bzw. nach vorne bewegt wird,
**dadurch gekennzeichnet, daß** die Führungschiene (15) einschießlich ihres hinteren Endes geradlinig ohne Abwinkelung verläuft,
und **daß** die zusammenwirkenden Führungsmittel aus einem an der Führungsschiene (15) nahe deren hinteren Ende angeordneten Führungsstift (29) und einer an dem Widerlager vorgesehenen, nach hinten offenen Führungskulisse (31) bestehen, wobei bei Annäherung des Widerlagers (9) an das hintere Ende der Führungsschiene (15) der Führungsstift in der Führungskulisse geführt ist und in Zusammenwirken mit dieser die Schwenkbewegung des Widerlagers (9) steuert.

2. Schleppfahrzeug nach Anspruch 1, **dadurch gekennzeichnet, daß** die Führungskulisse (31) geradlinig und parallel zur Führungsschiene (15) verläuft und **daß** der Führungsstift (29) gegenüber dem Angriffspunkt des Linearantriebs (11) am Widerlager nach außen versetzt angeordnet ist.

3. Schleppfahrzeug nach Anspruch 1, **dadurch gekennzeichnet, daß** die Führungskulisse (31') eine Profilform mit einem schräg zur Längsrichtung der Führungsschiene verlaufenden Kulissenabschnitt aufweist.

4. Schleppfahrzeug nach einem der Ansprüche 1 bis 3,
**dadurch gekennzeichnet, daß** das Widerlager (9) an der Führungsschiene (15) mittels vorderer und hinterer Führungsrollen (23, 25) geführt ist, und **daß** die hinteren Führungsrollen (25) am Ende des Rückwärtshubes des Widerlagers die Führungsschiene verlassen, nachdem der Führungsstift (29) in die Führungskulisse (31) eingetreten ist.

5. Schleppfahrzeug nach Anspruch 4, **dadurch gekennzeichnet, daß** der Linearantrieb (11) mit dem Widerlager in einem Gelenk verbunden ist, **daß** koaxial zur vorderen Führungsrolle (23) angeordnet ist.

6. Schleppfahrzeug nach einem der Ansprüche 1 bis 5, **dadurch gekennzeichnet, daß** jede Führungsschiene (15) mit der Hubschaufel (7) starr verbunden und gemeinsam mit dieser aufwärts und abwärts schenkbar ist.

7. Schleppfahrzeug nach einem der Ansprüche 1 bis 6,
**dadurch gekennzeichnet, daß** am hinteren Ende jeder Führungsschiene (15) ein nach außen abgewinkelter Stützansatz (39) vorgesehen ist, der das Gewicht des in die Freigabestellung ausgeschwenkten Widerlagers (9) abstützt.

## Claims

1. Hauling vehicle for aircraft with a lifting and clamping device (5) for picking up the front landing gear of an aircraft, disposed in a U-shaped gap (3) of the chassis (1), which is open towards the rear end, and comprising a raisable and lowerable lifting platform (7) for supporting the front wheels, and two abutments (9) displaceable in the longitudinal direction of the chassis for reaching behind and clamping the front wheels, each of the abutments (9) being displaceably guided along a guide rail (15) extending in the longitudinal direction of the vehicle and being capable of being driven along the said guide rail by means of a linear drive (11), each of the abutments (9) being pivotable around an essentially vertical axis from an operating position, in which it protrudes into the U-shaped gap (3) transversely to the longitudinal direction of the chassis, into a disengaged position, in which it is approximately parallel to the longitudinal direction of the vehicle and does not obstruct the entry of the front wheels into the U-shaped gap, and cooperating guiding means being provided on the guide rail and the abutment forcing the abutment (9) to pivot from the operating position into the disengaged position or vice versa in the region of the rear end of the guide rail (15) when the abutment is moved backwards or forwards by means of the linear drive,
**characterized in that** the guide rail (15), including its rear end, runs in a straight line without being angled,
and **in that** the interacting guide means comprise a guide pin (29) arranged on the guide rail (15) close to its rear end, and a slotted guide (31) which is provided on the abutment and is open towards the rear, the guide pin being guided into the slotted guide as the abutment (9) approaches the rear end of the guide rail (15) and, interacting with the said slotted guide, controlling the pivoting movement of the abutment (9).

2. Hauling vehicle according to Claim 1, **characterized in that** the slotted guide (31) runs straight and parallel to the guide rail (15), and **in that** the guide pin (29) is arranged to be offset outwards with respect to the point of action of the linear drive (11) on the abutment.

3. Hauling vehicle according to Claim 1, **characterized in that** the slotted guide (31') has a profiled shape with a slotted guide portion which runs obliquely with respect to the longitudinal direction of the guide rail.

4. Hauling vehicle according to one of Claims 1 to 3, **characterized in that** the abutment (9) is guided on the guide rail (15) by means of front and rear guide rollers (23, 25), and **in that** the rear guide rollers (25) leave the guide rail at the end of the return stroke of the abutment once the guide pin (29) has entered into the slotted guide (31).

5. Hauling vehicle according to Claim 4, **characterized in that** the linear drive (11) is connected to the abutment in a joint which is arranged coaxially with the front guide roller (23).

6. Hauling vehicle according to one of Claims 1 to 5, **characterized in that** each guide rail (15) is rigidly connected to the lifting platform (7) and can be pivoted upwards and downwards together with the latter.

7. Hauling vehicle according to one of Claims 1 to 6, **characterized in that** an outward-angled supporting projection (39) which supports the weight of the abutment (9) pivoted out into the disengaged position is provided at the rear end of each guide rail (15).

## Revendications

1. Véhicule de remorquage pour avions,
avec un dispositif de levage et de fixation (5) qui loge le train d'atterrissage avant d'un avion, qui est agencé dans une entaille en U (3), ouverte vers l'arrière, du châssis (1) et qui comporte une pelle élévatrice (7) pouvant être levée et baissée pour supporter les roues avant d'atterrissage et deux butées (9) mobiles dans la direction longitudinale du châssis pour prendre par derrière et fixer les roues avant d'atterrissage,
dans lequel chaque butée (9) est guidée mobile sur un rail de guidage (15) s'étendant dans la direction longitudinale du véhicule et peut être entraînée le long de ce rail de guidage au moyen d'un dispositif d'entraînement linéaire (11),
dans lequel chaque butée (9) peut pivoter autour d'un axe globalement vertical d'une position de travail, dans laquelle elle dépasse dans l'entaille en U (3) transversalement à la direction longitudinale du châssis, à une position de libération, dans laquelle elle est sensiblement parallèle à la direction longitudinale du véhicule et elle n'empêche pas l'entrée des roues avant d'atterrissage dans l'entaille en U,
et dans lequel il est prévu sur le rail de guidage et sur la butée des moyens de guidage coopérants qui forcent, dans la zone de l'extrémité arrière du rail de guidage (15), un pivotement de la butée (9) hors de la position de travail dans la position de libération ou inversement lorsque la butée est déplacée au moyen du dispositif moteur linéaire vers l'arrière ou vers l'avant,
**caractérisé en ce que** le rail de guidage (15), y compris son extrémité arrière, s'étend de façon rectiligne sans faire de coude,
et **en ce que** les moyens de guidage coopérants sont constitués d'un goujon de guidage (29) agencé sur le rail de guidage (15) près de l'extrémité arrière de celui-ci et d'une coulisse de guidage (31) prévue sur la butée et ouverte vers l'arrière, le goujon de guidage étant guidé dans la coulisse de guidage lorsque la butée (9) approche de l'extrémité arrière du rail de guidage (15), et commandant le pivotement de la butée (9) en coopérant avec cette coulisse de guidage.

2. Véhicule de remorquage selon la revendication 1, **caractérisé en ce que** la coulisse de guidage (31) s'étend de façon rectiligne et parallèle au rail de guidage (15) et **en ce que** le goujon de guidage (29) est agencé décalé vers l'extérieur par rapport au point d'action du dispositif d'entraînement linéaire (11) sur la butée.

3. Véhicule de remorquage selon la revendication 1, **caractérisé en ce que** la coulisse de guidage (31') a une forme profilée avec un tronçon de coulisse s'étendant obliquement par rapport à la direction longitudinale du rail de guidage.

4. Véhicule de remorquage selon l'une des revendications 1 à 3, **caractérisé en ce que** la butée (9) est guidée sur le rail de guidage (15) au moyen de galets de guidage avant et arrière (23, 25) et **en ce que** les galets de guidage arrière (25) quittent le rail de guidage à la fin de la course de retour de la butée après que le goujon de guidage (29) est entré dans la coulisse de guidage (31).

5. Véhicule de remorquage selon la revendication 4, **caractérisé en ce que** le dispositif d'entraînement linéaire (11) est assemblé à la butée en une articulation qui est agencée de manière coaxiale par rapport au galet de guidage avant (23).

6. Véhicule de remorquage selon l'une des revendications 1 à 5, **caractérisé en ce que** chaque rail de guidage (15) est assemblé de manière rigide à la pelle élévatrice (7) et est pivotant vers le haut et vers le bas conjointement à celle-ci.

7. Véhicule de remorquage selon l'une des revendications 1 à 6, **caractérisé en ce qu'**il est prévu à l'extrémité arrière de chaque rail de guidage (15) une pièce de support (39) qui est coudée vers l'extérieur et qui supporte le poids de la butée (9) ayant pivoté vers l'extérieur dans la position de libération.
